# EUROPEAN PATENT APPLICATION

(11) **EP 1 686 804 A1**
(43) Date of publication of application: **02.08.2006**
(21) Application number: 05290189.9
(22) Date of filing: 26.01.2005
(51) Int. Cl.: H04N 7/16

(54) **Predictor of multimedia system user behavior**

(71) Applicant: ALCATEL, 75008 Paris (FR)
(72) Inventor: Trappeniers, Lieven Leopold Albertine, 2200 Herentals (Noorderwijk) (BE); Godon, Marc Bruno Frieda, 1840 Londerzeel (BE); Coppens, Toon, 2500 Lier (BE); Handekyn, Koen, 9080 Lochristi (BE); Dacquin, Hendrik Eugène Irène Nicolas, 9000 Gent (BE); Bouwen, Jan Alfons Albert, 2000 Antwerp (BE); Hendrikse, Arjen, 1040 Etterbeek (BE); Moons, Jan Lode Mia, 2220 Heist-op-den-Berg (BE); Baekeland, Rony Alfons Maria, 2000 Antwerp (BE); van Broeck, Sigurd, 2980 Zoersel (BE)
(74) Representative: Narmon, Gisèle Marie Thérèse

(57) **Abstract**

A terminal device (TD) coupled to a multimedia distribution system (MDS). The terminal device is provided with an interface (IM) having selection buttons associated to sensors (SNS) for allowing a user not only to select multimedia outputs from the multimedia distribution system (MDS), but also for transmitting zapping intentions corresponding to the behavior of the user to a user behavior analyzing device build into the terminal device. The zapping intentions are derived from biometric parameters such as pressure, movement, temperature, heartbeat and/or sweat and are translated by the user behavior analyzing device into behavior parameters that are transmitted to and interpreted by the multimedia distribution system. As feedback, the multimedia distribution system replies with second multimedia outputs with the purpose of orienting or influencing the user in his/her selection choice. As a result, the real intention of the user to zap away from a channel is detected and a qualitative context to the zapping after it occurs is given, thereby allowing to increase broadcast user's channel loyalty.

## Description

The present invention relates to a terminal device coupled to a multimedia distribution system, said terminal device being provided with an interface having a plurality of selection means for allowing a user to select predetermined multimedia outputs from said multimedia distribution system.

Such a terminal device and multimedia distribution system is generally known in the art. The terminal device is for instance a remote controller for selecting channels on a multimedia broadcast system such as TV broadcast, interactive TV (iTV), Digital Audio Broadcast, ...

A problem with known multimedia broadcast systems is that they have no means for predicting whether a user will "zap" away from a channel or not, i.e. has the intention to change the current channel selection.

Solutions exist to personalize iTV by means of menu structures and advertisement content, in order to guide the user through a so-called Intent State Machine (ISM) towards an optimal endpoint.

However, the known solutions focus on in-program behavior and do not address channel churn. Furthermore, the construction of the ISM is based on user's usage profiles combined with databases of known user profiles. Such information only leads to a rough and inaccurate ISM that has no link to any real "intent" of the user. Known terminals devices have no means to detect the intentions or state of a user and cannot give context to an observed behavior. In other words, there is a lack of useful information to construct the Intent State Machine (ISM) that is thereby forced to turn to "fact-and-figures" usage profiles.

An object of the present invention is to provide a terminal device and multimedia distribution system of the above known type but adapted to detect the real intention of the user to zap away from a channel and give qualitative context to the zapping after it occurred, thereby allowing to increase broadcast user's channel loyalty.

According to the invention, this object is achieved due to the fact that the selection means of said interface comprise sensors coupled to a user behavior analyzing device adapted to detect and to analyze the behavior of said user, and to generate corresponding behavior parameters, and that said interface is further adapted to transmit said behavior parameters to said multimedia distribution system which is further adapted to provided in return second predetermined multimedia outputs.

The sensors are sensitive buttons that transmit zapping intentions corresponding to the behavior of the user to the user behavior analyzing device. The latter translates these intentions into behavior parameters that are interpreted by the multimedia distribution system. As feedback, the multimedia distribution system sends the second predetermined multimedia outputs with the purpose of orienting (or influencing) the user in his/her selection choice.

As a result, the present terminal device gives the possibility to increase the user's loyalty to a channel by personalizing the interaction and injecting personalized content, i.e. the second predetermined multimedia outputs. In other words, the terminal device allows a pro-active action to be undertaken by the channel-operator or multimedia distribution system in order to reduce churn.

Another characterizing embodiment of the present invention is that said user behavior analyzing device is adapted to detect and to analyze biometric parameters of said user. Such parameters are for instance pressure, movement, temperature, heartbeat and/or sweat.

This list of user's biometric parameters is obviously not exhaustive.

Also another characterizing embodiment of the present invention is that said user behavior analyzing device operates instantaneously on the user's interaction with the sensors to determine a qualitative profile of said user.

By operating instantaneously or at real time on the user's interaction with the sensors to determine his qualitative or emotional profile, the second predetermined multimedia outputs can be provided to the user prior to he/she effectively presses a selection means or button, i.e. zaps to another channel.

Yet another characterizing embodiment of the present invention is that said terminal device is a handheld terminal.

The terminal device is for instance a zapping device as in the above example, but may also be a mobile phone (gsm) or any other handheld multimedia device.

In a preferred embodiment, the present invention is characterized that said user behavior analyzing device is located in said terminal device.

Other locations are however also possible for the user behavior analyzing device.

Further characterizing embodiments of the present terminal device and multimedia distribution system are mentioned in the appended claims.

It is to be noticed that the term 'comprising', used in the claims, should not be interpreted as being restricted to the means listed thereafter. Thus, the scope of the expression 'a device comprising means A and B' should not be limited to devices consisting only of components A and B. It means that with respect to the present invention, the only relevant components of the device are A and B.

Similarly, it is to be noticed that the term 'coupled', also used in the claims, should not be interpreted as being restricted to direct connections only. Thus, the scope of the expression 'a device A coupled to a device B' should not be limited to devices or systems wherein an output of device A is directly connected to an input of device B. It means that there exists a path between an output of A and an input of B which may be a path including other devices or means.

The above and other objects and features of the invention will become more apparent and the invention itself will be best understood by referring to the following description of an embodiment taken in conjunction with the accompanying drawings wherein:
Fig. 1 represents a terminal device (TD) coupled to a multimedia distribution system (MDS) according to the invention;
Fig. 2 shows operations of the interface (IM) of the terminal device (TD) and of the user behavior analyzing device; and
Fig. 3 is an example of zapping intention of a user operating the sensors (SNS) of the terminal device (TD).

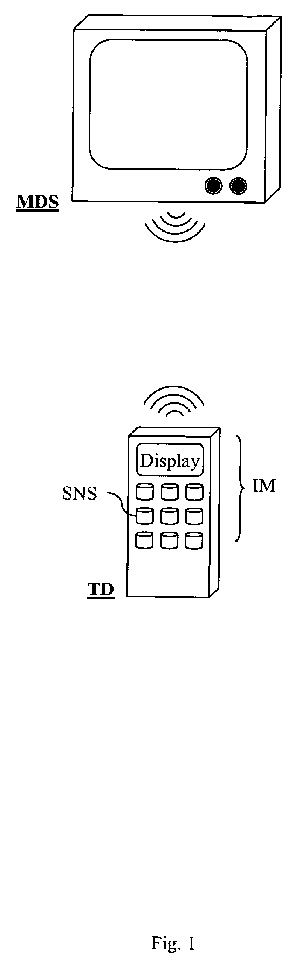

A multimedia broadcast system comprising a terminal device TD coupled to a multimedia distribution system MDS is schematically represented at Fig. 1. In the following example of implementation of the invention, the terminal device TD is for instance a "zapping" device or channel selection device, but it may also be a mobile phone (gsm) or any other handheld multimedia device such as a PDA or remote controller for Radio, iTV, TV, WebPad, ...

Additionally to the classical selection means or buttons provided on the terminal device TD for allowing a user to select predetermined multimedia outputs from the multimedia distribution system or television MDS, this terminal device TD is provided with sensors SNS. These sensors SNS are preferably build into the selection buttons and form part of an interface IM comprising also, for instance, a display.

The purpose of the sensors SNS is to collect biometric parameters of the user in order to include a new functionality in the terminal device TD. By knowing the user's intention to make a channel switch, the terminal device TD may provide information about an associated motive. To this end, the sensors SNS are coupled to a user behavior analyzing device (not shown) able to detect and to analyze the behavior of the user, and to generate thereby corresponding behavior parameters. The user behavior analyzing device may be located either in the terminal device TD or in the multimedia distribution system MDS. In a variant embodiment, it may have a first portion located in the terminal device TD and a second portion in the multimedia distribution system MDS. However, preferably the user behavior analyzing device belongs to the interface IM. The behavior parameters give qualitative information (context and motive) related to an event (for example a channel switch) that goes far beyond known usage-profile techniques. The behavior parameters are transmitted to the multimedia distribution system MDS that, in return, is able to provide second predetermined multimedia outputs. The second predetermined multimedia outputs are signals provided to the user prior to he/she effectively presses another selection button, i.e. zaps towards another channel, in order to influence his/her decision.

The object of the above operations is to increase broadcast user's channel loyalty by means of early churn-detection in broadcast consumers zapping behavior. The behavior parameters provide answers to questions such as:
- Is the user feeling comfortable?
- Is the user getting nervous?
- Why did the user switch channel?
- Was the user hesitating?
- How was the user feeling?
- What was the user's heartbeat?
- etc ...

Biometric parameters detected by the sensors SNS and corresponding analyzes done by the user behavior analyzing device are for instance:
- Pressure detection: the user is hesitating to switch
- Movement detection of finger: the user is about to switch
- Temperature detection in key: the finger has moved or is moving
- Reflection of emitted light-beam: presence of finger on key
- Heartbeat detection, e.g. on the thumb: emotion detection
- Sweat detection, e.g. on hand palm: emotion detection
- Body temperature: emotion detection
- Motion, direction, etc ...: emotion detection

Wherein the detected emotion may be angry, anxious, fear, excitement, ...

As feedback to the behavior parameters received from the user behavior analyzing device of the interface IM, the multimedia distribution system MDS returns second predetermined multimedia outputs to the terminal device TD with the purpose of influencing the user in his/her selection choice. The feedback of the multimedia distribution system MDS to the terminal or handheld device TD and so further to the end user can be published on the display of the handheld device or mixed within the content published on the main viewer appliance (TV) which is under control of this handheld device, in case of a remote control of a TV set. Additionally, the feedback could result in a modification of the interaction layer with the aim to guide the user to a desired result.

Examples of possible applications are:
1. Tooltip when "thumb-over-button". When the user moves his thumb over a button, a message is given to him/her. This message may be:
   - an advertisement for a channel
   - a message explaining the function of the button
   - an alert of online buddies on the channel,
2. Send targeted content based on change-intention-detection: launch a trailer of a movie within the user's interest when the intention to switch channel is detected. The user will then change his intention and stay on the channel,
3. Learn from "context" and "motive" just before channel switch: once the user has switched, the context and motive provide detailed user information that may go far beyond known usage-profile techniques.

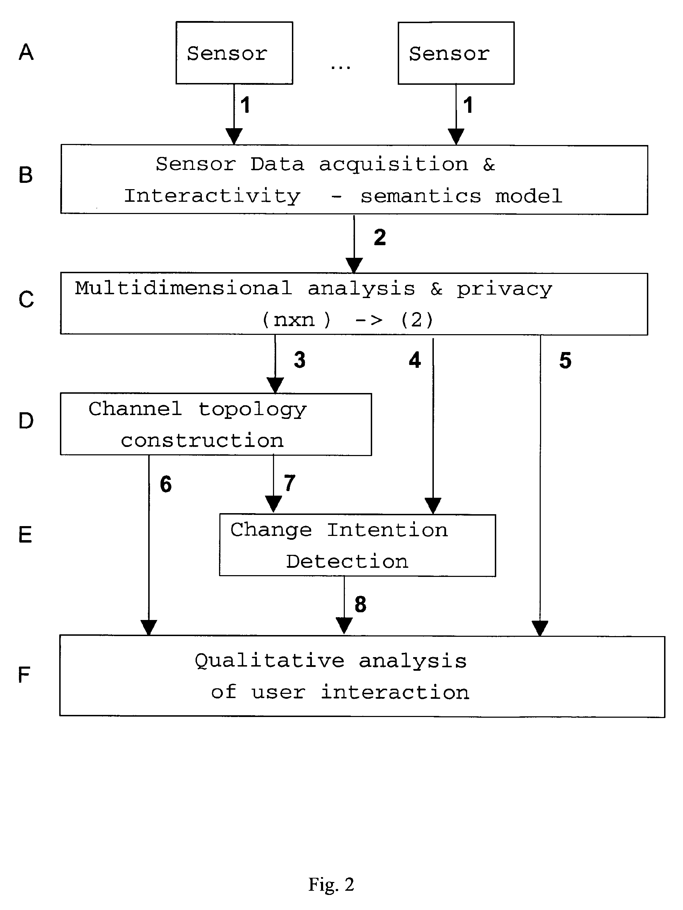

The operation of the interface IM of the terminal device TD and of the user behavior analyzing device is shown at Fig. 2. In this functional view, the sensors (shown at row A of Fig. 2) of the terminal device TD give information to a sensor data-acquisition and interactivity semantics module (row B). This module adds semantics and a time-stamp to the sensor's information. The resulting data are sent to a module (row C) that performs a multidimensional analysis that reduces the n x n complexity to fewer, e.g. 2, dimensions and adds privacy.

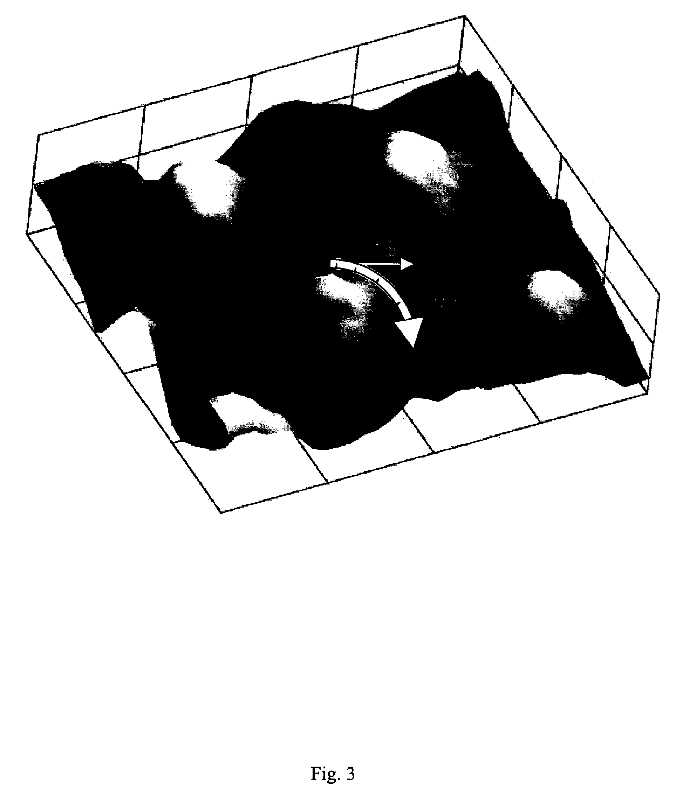

The next module in the data-flow is the channel-topology construction module (row D). This module processes the fed-in data into a topological representation that introduces positions, distances and potential-barriers between the user and his/her attractors and repulsors (channels). An illustrative visualization of such a topology is given at Fig. 3, which shows a multidimensional topology of channels ChX, ChY, ChZ and possible changes.

This module incrementally constructs this topology based on incoming data and detects a convergence into known patterns.

The change-intention detection module (row E) processes the fed-in data into a prediction of the user's loyalty and churn. It also can give an indication of the direction of the predicted change vector.

A final module (row F) does the qualitative analysis of the user interaction by processing the fed-in data into a pre-change context, a motive, classification, ...

Hereafter follows an example of data-flow making reference to the numerals indicated at Fig. 2 and to the values shown at Fig. 3:

| | |
|---|---|
| **1** | "jkgh5gois03hl", "lo1hj4v1", "HB130" |
| **2** | <22/10/2003 - 15:34:11> keypressed= <1>, heartbeat= 130, but decreasing, finger position=<2> |
| **3, 4, 5** | user is <getting bored> at <ChX> and finger is on <ChY> button |
| **6, 7** | user is at <ChX> but moving away with velocity <19> <ChY> is attractor with weight <189> <ChZ> is attractor with weight <15> but increasing |
| **8** | change intention= 70% (50% for ChY, 10% for other). |

It is to be noted that, as already mentioned, the terminal device and multimedia distribution system is described above from the viewpoint of a user zapping between broadcast channels. The present invention is however also valid for watching movies on a UMTS terminal, browsing on a PDA, steering home-automation with a remote control, ...

A final remark is that embodiments of the present invention are described above in terms of functional blocks. From the functional description of these blocks, given above, it will be apparent for a person skilled in the art of designing electronic devices how embodiments of these blocks can be manufactured with well-known electronic components. A detailed architecture of the contents of the functional blocks hence is not given.

While the principles of the invention have been described above in connection with specific apparatus, it is to be clearly understood that this description is merely made by way of example and not as a limitation on the scope of the invention, as defined in the appended claims.

## Claims

1. A terminal device (TD) coupled to a multimedia distribution system (MDS), said terminal device (TD) being provided with an interface (IM) having a plurality of selection means (SNS) for allowing a user to select predetermined multimedia outputs from said multimedia distribution system,
***characterized in that*** the selection means of said interface (IM) comprise sensors (SNS) coupled to a user behavior analyzing device adapted to detect and to analyze the behavior of said user, and to generate corresponding behavior parameters,
***and in that*** said interface is further adapted to transmit said behavior parameters to said multimedia distribution system (MDS) which is further adapted to provided in return second predetermined multimedia outputs.

2. The terminal device and multimedia distribution system according to claim 1, **characterized in that** said user behavior analyzing device is adapted to detect and to analyze biometric parameters of said user.

3. The terminal device and multimedia distribution system according to claim 2, **characterized in that** said biometric parameters are pressure, movement, temperature, heartbeat and/or sweat.

4. The terminal device and multimedia distribution system according to claim 1, **characterized in that** said user behavior analyzing device operates instantaneously on the user's interaction with the sensors (SNS) to determine a qualitative profile of said user.

5. The terminal device and multimedia distribution system according to claim 4, **characterized in that** said user behavior analyzing device determines said user's qualitative profile based on historic and learning process.

6. The terminal device and multimedia distribution system according to claim 1, **characterized in that** said terminal device is a handheld terminal.

7. The terminal device and multimedia distribution system according to claim 1, **characterized in that** said user behavior analyzing device is located in said terminal device (TD).

8. The terminal device and multimedia distribution system according to claim 1, **characterized in that** said user behavior analyzing device is located in said multimedia distribution system (MDS).

9. The terminal device and multimedia distribution system according to claim 1, **characterized in that** said user behavior analyzing device has a first portion located in said terminal device (TD) and a second portion located in said multimedia distribution system (MDS).
